(19) Europäisches Patentamt
European Patent Office
Office européen des brevets

(11) **EP 4 779 509 A1**

(12) **EUROPEAN PATENT APPLICATION**

(43) Date of publication:
**22.07.2026 Bulletin 2026/30**

(21) Application number: **25152913.7**

(22) Date of filing: **20.01.2025**

(51) International Patent Classification (IPC):
*G06F 30/23* (2020.01)    *B33Y 50/00* (2015.01)
*G06F 111/10* (2020.01)    *G06F 113/10* (2020.01)
*G06F 119/08* (2020.01)    *G06F 119/18* (2020.01)

(52) Cooperative Patent Classification (CPC):
**G06F 30/23; B22F 10/28; B22F 10/40; B22F 10/80; B33Y 50/00;** G06F 2111/10; G06F 2113/10; G06F 2119/08; G06F 2119/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Energy Global GmbH & Co. KG**
**81739 München (DE)**

(72) Inventors:
• **Vollmer, Matthias**
  **59846 Sundern (DE)**
• **Heitmann, Timo**
  **10245 Berlin (DE)**

(54) **ADDITIVE MANUFACTURING BUILT SIMULATION DATA STRUCTURE AND RELATED BUILD SIMULATION METHOD**

(57)    An additive manufacturing built simulation data structure (DS) is provided. The data structure being assembled for a finite element analysis (FEM) of mechanical properties (M, T) of an object (1) to be additively manufactured, wherein the data structure (DS) comprises a matrix pattern representing an elasticity tensor (E), wherein matrix elements of the elasticity tensor (E) comprise material properties of a Young's modulus (E), a shear modulus (G) and/or a Poisson's ratio (v) of the object (1), and a model function ($f_{ij}$) being independent from the material properties (MP), wherein the function ($f_{ij}$) considers a set of build process parameters (PP), a machine setup, a voxel volume filling (Vf) and/or a lattice type for the build simulation. Moreover, an additive manufacturing built simulation method for simulating the manufacture of the object (1), is presented, the method comprising, (i), accessing the data structure (DS), and (ii), performing the build simulation by executing a finite element algorithm (FEM) based on the entries of the data structure (DS), wherein all material properties (MP) are defined as constants in the matrix and only the elements of the model function ($f_{ij}$) are calibrated for a given material.

FIG 8

EP 4 779 509 A1

**Description**

The present invention relates to an additive manufacturing built simulation data structure and the additive manufacturing built simulation method as such which accesses and/or makes use of the new data structure. Moreover, a computer program, a computer readable storage medium and as well a device comprising said computer readable storage medium and/or comprising means to execute the computer program are subject to the invention.

Additive manufacturing (AM), particularly powder-bed methods have proven to be useful and advantageous in the fabrication of prototypes or complex components, such as components with filigree structure or functionally cooled components. Further, the additive manufacture stands out for its short chain of process steps which in turn enables material economization and a particularly low lead time.

Additive manufacturing or 3D-printing techniques comprise e.g. powder-bed-fusion methods, such as selective laser melting (SLM) or laser powder bed fusion (LPBF), selective laser sintering (SLS) and electron beam melting (EBM). Moreover, additive manufacturing approaches relate to "Directed Energy Deposition (DED)", such as laser cladding, electron beam or plasma welding, metal inkjet molding (MIM), sheet lamination methods, or even thermal spraying (VPS, LPPS) methods.

Related machine hardware for LPBF usually comprise a manufacturing or build platform on which the component is built layer-by-layer after the feeding of a layer of base material which may then be melted, e.g. by an energy beam, such as a laser, and subsequently solidified. The layer thickness is determined by a recoater that automatically moves over the powder bed and removes excess material from a manufacturing plane or fabrication space. Typical layer thicknesses amount to between 20 $\mu$m and 40 $\mu$m for example. During the manufacture, said energy beam scans over the surface and melts the powder on selected areas which may be predetermined by a CAD-file according to the geometry of the object to be manufactured. Said scanning or irradiation is preferably carried out in a computer-assisted way, such as Computer-Aided-Manufacturing (CAM) instructions, which may be present in the form of a dataset. Said dataset or CAM-file may be or refer to a computer program or computer program product.

Geometrical complexity of the object so manufactured often requires an adequate build job simulations and preparation. It is evident e.g. that overhanging object features require to be thermally and mechanically supported by support structures which are usually established in the form of lattices so that manufacturing time and material use can be reduced for the support on the one hand, while also a later removal of the object, such as by cutting the supports, is facilitated. Even though support structures do not regularly form part of the object per se, its design is crucial as they have a massive impact on the build process's success.

To save material and time and costs, low-mass support structures are aimed for. Such low mass or lattice support structures inherently comprise a complex design which needs to be designed and validated with so-called additive manufacturing build simulations. Therefore, an accurate prediction of all occurring mechanical properties is required. Accurate parameters are obtained by calibrating materials with their large number of input variables. The correct calibration and application are very time- and cost-intensive throughout.

A method for additive manufacturing of a component with a topology-optimized support structure based on a thermo-mechanical process simulation is described in EP 4 287 060 A1, for example.

The build setup of challenging AM design and objects of high accuracy is hence performed with the help of a build process simulation. Usually, the part's and supports' build process is first simulated with an initial guess or trial for the whole setup. Depending on the obtained results, the parts' orientation, material, used machine settings, process parameters, support topology, support lattices, and/or a pre-deformation are updated in a process comprising several iterations until a feasible state is accomplished.

AM build simulation approaches regularly apply so-called finite element analyses and multi-physics modeling calculations, wherein the part or object is discretized either by a voxel or tetrahedron mesh. At least the design for the support is usually modeled with a voxel mesh of a certain granularity. This 'voxel approach' considers a linear dependency of the material parameters based on the voxel size, which directly corresponds to the voxel volume filling, fraction or filling ratio. In particular, the material properties are modeled linearly in volume filling according to a third order monomial in the voxel size, meaning e.g. an edge length of a voxel (cube).

In conventional build simulation approaches, a status or level of a structure to be present in a given voxel (volume filling) is evaluated for the supports. This, however, often leads to lengthy and complex built simulations in which partly filled voxels are hardly practical and usable. The reason is that any material related information about the underlying structure and its size in a given voxel is lost or cannot be traced, as material parameters are treated in the same way as and along with any further aspects or process parameters during the built simulation.

In other words, as soon as a voxel is not a complete solid or a complete void, the actual material's behaviour deviates significantly or shows poor reproducibility. Especially for favorable lattice structures, these conditions cannot be met, as a voxel mesh is often required to be so fine that, for the model to be accurate, it would take computation times of several days or even weeks, which render the results unreasonable and non-competitive. This is because the set of material data is not only dependent on the specific material parameters, but also on the chosen process parameters, the type of AM machine, the voxel size, lattice type and lattice volume fraction. Due to these many input parameters, new material data are needed all the time, which must be calibrated, thereby generating costs.

It is hence an object of the present invention to provide means that help to overcome the outlined issues, particularly regarding the simulation effort and complexity.

The mentioned object is achieved by the subject-matters of the independent claims. Advantageous embodiments are subject-matter of the dependent claims.

An aspect of the present invention relates to an additive manufacturing built simulation data structure or data structure product being assembled or tailored for a finite element analysis of mechanical and/or thermal properties of a (predefined) object to be additively manufactured. The object is preferably manufactured by a powder bed fusion approach.

The data structure comprises a matrix pattern representing an elasticity tensor or is stress/strain tensor, wherein matrix elements of the (elasticity) tensor comprise or depend on (or are parameterized by) material properties of a Young's modulus, a shear modulus and/or a Poisson's ratio of the object, which can be predefined.

The data structure further comprises a model function or coefficient being independent from the material properties, wherein the function instead considers a set of build process parameters, a machine or 3D printer set up, a voxel or volume filling ratio and/or a lattice type for the build simulation.

The term "process parameters" may denote any further material-independent parameters pertaining to settings for the build preparation and/or during the build job. Particularly, said parameters pertain to the laser power, scan velocity, beam offset, beam focus, beam wavelength, scanning pattern, or further hardware-related settings, like gauge settings, or the like.

The particular data structure in the form of a tensor advantageously allows to provide input data which can be easily and expediently read, accessed, edited and amended by related simulation programs or software modules. The presented data structure is particularly useful in the context of finite element calculations or simulations. Moreover, the tensor form allows to provide data which are independent from a particular coordinate system.

It is evident for skilled person that the data structure is preferably no graphical structure, like a matrix appearance, but an abstract matrix with directional elements indicating, elasticity, stress or strain or similar entries in a multi-linear map.

As an advantage of the provided data structure, it helps to provide for a versatile material database or data set, wherein complicated calculation routines including material parameters can be largely dispensed with, as material data are provided in a genuine way and can be processed separate from further build process parameters, lattice and hardware settings. In other words, a versatile and sustainable data structure can be provided that can further be embodied in a user-defined way. The inventive data structure particularly enables to overcome the insufficiencies of the known voxel filling approach for lattice structures, the calculation and modeling of which does not distinguish between material and process parameters, for instance.

By implementing this user-defined material set for the voxel mesh within the AM process model, creation and calibration of new artificial material data for changing the build setup becomes particularly obsolete. In turn, this strongly reduces the required amount of material data, accelerates the design process and simplifies related data management.

Since the physical behavior of certain lattice structures is well known in the art, the presented structure offers improved transferability of results in general, which also holds for and enable sphenological models for the machine and process parameters. In general, the improved transferability reduces the total number of build design iterations. Besides that, the design of material-efficient and generally favorable lattice structures is no longer linked to the high efforts of new material calibrations.

The inventive data structure further accomplishes a tool or fully new workflow with fewer calibrations and less build design iterations. With the proposed approach the calibration effort for materials is reduced heavily and the design process streamlined. The time advantage holds especially for the design of material efficient lattice structures, by eliminating the additional effort for changing the lattice or its density. As mentioned above, said "additional effort" mainly stems from the material parameter calibration linked to conventional modeling approaches which are inherently needed to be modeled in case of any new lattice setting or density variation.

As a result, the design process is much faster, material data management rendered simpler which as well leads to a strong cost advantage. Apparently, this in turn allows to step up industrialized additive manufacturing innovation and technology.

In addition to the above-mentioned tensor matrix elements, the data structure may as well comprises a further matrix pattern representing a thermal conductivity tensor, wherein matrix elements of the thermal conductivity tensor comprise material properties of a thermal conductivity and/or a thermal expansion behavior of the object. The structure of thermal conductivity values are elements as part of the data structure likewise facilitate the above-mentioned advantages in the context of (multiphysics) FEM built simulation approaches.

A further aspect of the present invention relates to an additive manufacturing built simulation method for simulating the manufacture of the object comprising accessing or making use of the described data structure.

Moreover, said method comprises performing the build simulation by executing a finite element algorithm, such as in a related design process, based on the entries or elements of the data structure, wherein all (i.e. mechanical and thermal) material properties are defined as (unchanged) constants in the matrix, and only the elements of the model function are actually modeled or calibrated for a given material. Preferably, the elements of the model function need to be calibrated only once for a given material.

The build simulation as is subject to the present invention may comprise an iterative adaption routine according to which a calibration is rendered free of any (further) modeling or calculation of material properties. It is, thus, evident that the use of the superior data structure imparts the above outlined advantages also for the presented built simulation method. The matrix elements of the data structure are e.g. accessed and edited individually with unchanged fundamental material properties, thereby forming an artificial or user-defined material data set or related library. As an advantage of this, achieved simulation results could be stored and stocked without the need to perform the simulations multiple times as was the case in conventional build simulation modeling.

The method may be a multi-physics process simultaneously simulating or calculating physical stress on the object to be manufactured and a temperature distribution in the object and/or a thermal expansion which might in turn lead to variation of stress and temperature distributions.

In an embodiment the object comprises a lattice support structure. According to this embodiment, the outlined advantages manifest most predominantly due to the importance to provide a smart support strategy for complex components, e.g. employing topology optimization and several mesh refinement iterations.

It is a particular merit of the present invention that geometry of the lattice or its density may be changed during the built simulation or adaption process. This does - in contrast to conventional build simulation approaches - not significantly increase the modelling effort. The reason for this is that according to the merits of the presented data structure, material parameter evaluation is set and rendered independent from further process parameter modeling (cf. model function $f_{ij}$). An adaptive voxel or mesh structure with variable mesh sizes throughout a given component can e.g. be provided, wherein the mesh can be defined depending on predefined loads and hotspots.

As mentioned above, the presented data structure may further be archived on a phenological library, such as to serve as a base or template for a specific material, machine and/or process parameters in upcoming build process simulations.

Within the optimized build simulation approach, calibration of the model function is enhanced or evaluated by complex data processing means and/or artificial intelligence.

A further aspect of the present invention relates to a computer program (product) comprising means which, when the program is executed by a computer or data processing device, cause the computer or related simulation processor to carry out the steps of the method as described.

A further aspect of the present invention relates to an, e.g. non-transient or non-transitory, computer-readable storage medium e.g. having stored thereon the data structure and/or the computer program (product).

In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

A still further aspect of the present invention relates to a device, controller unit, computer, or processor for providing the data structure, particularly comprising a computer-readable storage medium having stored thereon the computer program, and comprising means to execute the described method.

The device may comprise a controller, such as a programmable logic controller (PLC). The controller may comprise at least one processor and said computer-readable storage medium, wherein the computer-readable storage medium comprises said computer program which, when executed by the at least one processor, cause the controller to perform the method as described above.

In other words, the at least one processor may be a microprocessor and/or a microcontroller and/or a FPGA (Field Programmable Gate Array) and/or a DSP (Digital Signal Processor).

The device may comprise means to provide the data structure and to execute said method.

The invention also relates to realizations comprising a combination of the features of several of the described embodiments.

Advantages and embodiments relating to the described data structure and/or the described method are valid or pertain likewise to the computer program and/or the device as described.

Further, features and advantageous embodiments become apparent from the following description of the exemplary embodiment in connection with the Figures.

Figure 1 depicts a schematic view of an additive manufacturing device for additively manufacturing a component together with its support structure.

Figure 2 is a schematic view of an optimized support structure manufactured e.g. with the device of Figure 1.

Figure 3 shows a schematic flow chart indicating in a simplified way the iterative nature of an additive manufacturing built simulation process.

Figure 4 shows a simplified matrix indicating an elasticity tensor as part of the data structure according to an embodiment of the present invention.

Figure 5 shows a simplified matrix indicating a thermal conductivity tensor of the inventive data structure in another embodiment.

Figure 6 shows the qualitative course of scaled material properties as a function of a voxel filling parameter.

Figure 7 illustrates modeling behavior at an edge of the object to be manufactured, wherein sub-voxel elements of a given super-voxel are filled according to the course of the edge.

Figure 8 shows - similar to Figure 3 - a flowchart representing a situation, where the inventive solutions are applied.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

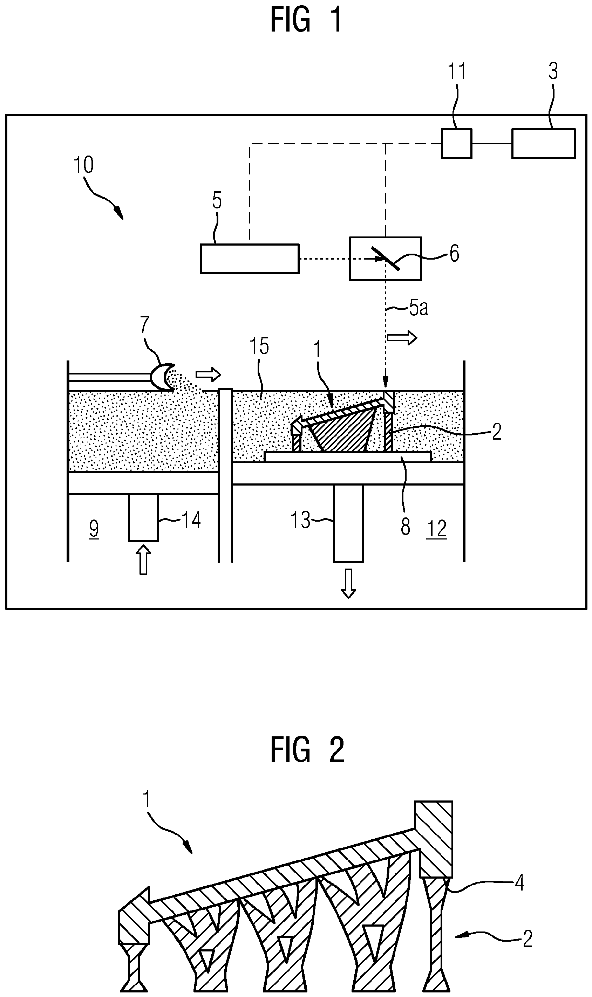

Figure 1 shows a schematic view of an additive manufacturing device 10 according to an embodiment of the present invention for additively manufacturing (AM) a component or an object 1 together with its support structure 2.

The 3D-printing method may be used for the additive production of the article or object 1 together with its support structure 2, from a modelling material 15. To this end, the method may comprise additively manufacturing the component 1 by depositing and solidifying a modelling material 15 in material layers. This may particularly comprise liquefying or melting the deposited modelling material 15.

The basic AM process may, for example, be a selective laser melting process (also called Laser Powder Bed Fusion), in which the deposited modelling material 15 is melted by a continuous or pulsed laser beam 5a being focused on a localized melt spot on the uppermost layer of the modelling material 15. This results in a molten pool or bath at the irradiated spot, which may be several material layers deep and which may also melt some of the surrounding and already solidified modelling material 15. Next the laser beam 5a is moved further and the melt solidifies through cooling, whereby the last material layer is fused with the material layer(s) underneath.

The modelling material 15 may, for example, be selected from the group of metallic materials, metallic material combinations and metallic alloys. In one particular example, the modelling material 15 may be nickel, cobalt, iron, aluminum, titanium and/or other metal and/or an alloy or combination of these.

In principle, the manufacturing device 10 may be configured for multi-component printing so that combinations of different materials may be printed at the same time. The person of skill will be readily aware that the term (modelling) "material" 15 includes such combinations of materials. The modelling material 2 may particularly be provided in powder form.

Generally, the present invention provides many possibilities to liquefy the modelling material 15 by introducing heat locally into the deposited modelling material 15. The particular embodiment of the manufacturing device 10 in Figure 1 and the associated 3D-printing method is based on the use of the laser beam 5a within the LPBF process. Such a laser beam 5a can be controlled very accurately and focusses heat or energy locally on a small spot. The laser beam 5a is controlled by a control unit 11 of the additive manufacturing device 10, which may contain a microprocessor or the like and may be integrated in and/or communicatively connected to a computing system.

The control unit 11 may be or may be linked to a further device 3, like a further computer, controller or processor, being preferably set up to perform a build simulation process as is subject to the present invention. As will further be described by way of the figures below, the device 3 is suitable to access an inventive data structure which significantly improves the built simulation excellence for the manufacture of the object 1.

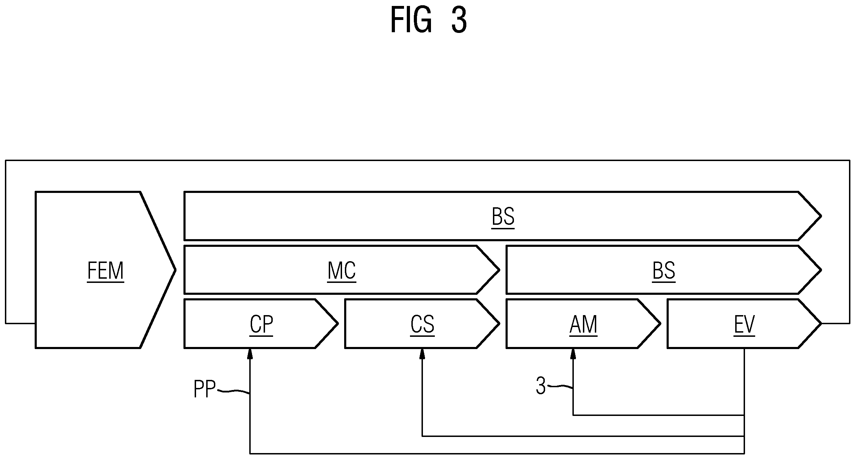

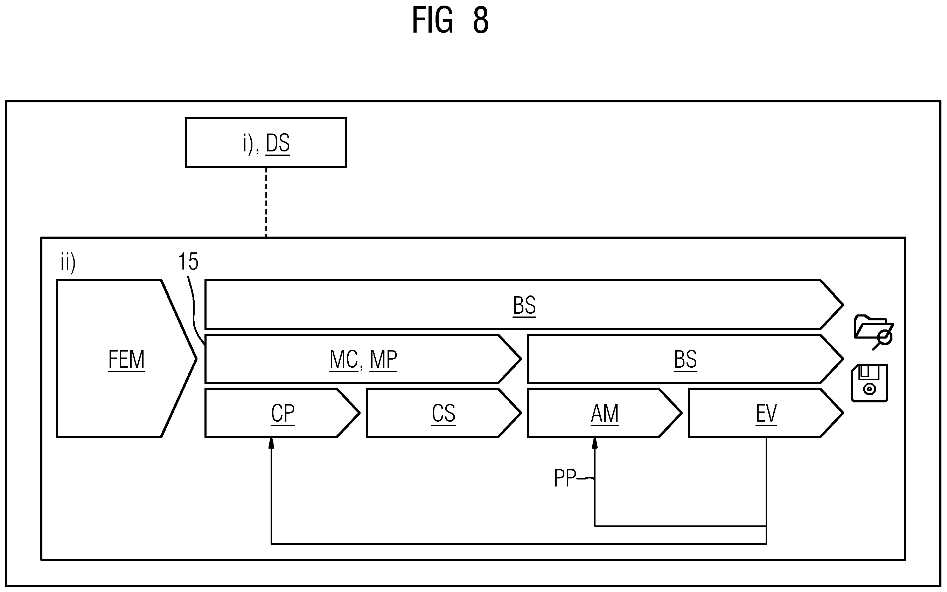

Once the built simulation has been performed (cf. Figures 3 and 8 below), further preparatory steps, e.g. the definition of process parameters, like a layer thickness and the irradiation parameters and vectors, need to be specified. When the build preparation is finalized, the modelling material 15 is applied in powder form on a fabrication table, plate or platform 8 within a fabrication chamber 12. The modelling material 15 is supplied from a supply chamber 9 adjacent to the fabrication chamber 12. To this end, a powder delivery system including a material feeder 7, roller and/or recoater blade are used to deliver modelling material 15 in a stepwise fashion for each deposited layer of modelling material 15 into the fabrication chamber 12. The modelling material 15 forms a so-called powder bed on the fabrication plate 8 within the fabrication chamber 12. The modelling material 15 laying on top of the powder bed is liquefied by local laser irradiation with the laser beam 5a, resulting in a solid, continuous metal component 1 after cooling. However, it is understood that alternatively or in addition to a laser beam 5a, the 3D-printing method M may also use particle beams, e.g. an electron beam, or other energy beams for liquefying the modelling material 15.

The manufacturing device 10 in Fig. 1 provides an energy source in the form of a laser 5, for example a Nd:YAG laser, a $CO_2$ laser or the like. In Figure 1, the laser 5 transmits the laser beam 5a selectively (i.e. locally) onto a certain part of the powder surface of the powdery modelling material 15. For this purpose, an optical deflection device or a scanner module such as a movable or tiltable mirror 6 can be provided, which deflects the laser beam 5a depending on its tilt position onto a certain part of the powder surface of the modelling material 15.

The manufacturing device 10 may further comprise the usual components for adjusting such a laser beam 5a, for example focusing optics or similar (not explicitly shown in Figure 1). At the point of impact of the laser beam 5a, i.e. the melt pool or spot, the modelling material 15 is heated so that the powder particles are locally melted and form an agglomerate during cooling. Depending on a digital production model provided by a CAD system ("computer-aided design") and build job preparation, the laser beam 5a scans the powder surface (see horizontal arrow in Figure 1). After selective melting and local 'fusion' of the powder particles in the surface material layer of the modelling material 15, excess and non-agglomerated metal modelling material 15 may be removed by a feeder or recoater 7.

Then the fabrication plate 8 is lowered by means of a fabrication piston 13 (see downwards pointing arrow in Fig. 1) and new modelling material 15 is transferred from the supply chamber 9 into the fabrication chamber 12 with the aid of the material feeder 7 or another suitable device. While the fabrication platform 8 is lowered stepwise via the fabrication piston 13 the modelling material 15 is moved upward within the supply chamber 9 by a supply piston 14 so that the material feeder 7 may move new modelling material 15 into the fabrication chamber 12. Within the fabrication chamber 12, the modelling material 15 may be preheated by infrared light or similar means to a working temperature just below the melting temperature of the modelling material 15 to accelerate the melting process or to control the heat impact.

The usage of LPBF and similar methods as manufacturing technology normally requires to provide the object 1 with a support structure 2 during the actual manufacturing to hold and stabilize the component on top of the fabrication plate 8. Such a support structure 2 usually comprises one or several individual supports 2 which are then removed later on during post-processing of the component 1 after the printing process has been finished.

Especially for components 1 with large volume, a lot of support is required to prevent deformation or potential job failures due to a rip-off or delamination from the manufacturing plate 8. In order to keep the required material, and thus the costs of the manufacturing process as low as possible, there is the need to keep such a support structure as lightweight and slim as possible. The support structure 20 further plays a crucial role in dissipating the heat from the fabrication chamber via the fabrication plate 8. If such heat dissipation is insufficient given the quasi-insulating thermal behavior of loose powder particles, excessive heat or hotspots might arise in the build-up which lead to an insufficient structural quality of the related object 1.

In an additive manufacturing method like the one described here, the 3D design of a component 1 thus necessarily also requires a digital 3D model of the corresponding support structure 2. Based on such a model, a three-dimensional sintered or "printed" metal component 1 is created together with its support structure 2 from modelling material 15 in an iterative generative build-up process, in which also the surrounding powdery modelling material 15 may serve to temporarily support the part of metal component 1 that has been built up until that instant. Due to the continuous downward movement of the fabrication table 8 the metal component 1 is manufactured in a layered fashion.

For example, the object 1 may be a turbine blade or vane fabricated from a metal material, e.g. for a heavy-duty industrial gas turbine engine for power generation. The vane may particularly require three volume supports, one on each of two distal wedge faces and one underneath a central airfoil. As shown by the tree-like or lattice-like design of the support 2 (contact area indicated with numeral 4), the support often and preferably undergoes a topology optimization in order to optimize material usage, thermal dissipation, and mechanical stability.

To satisfy these high demands and quality requirements, a huge library of materials, material properties, process parameters and possible further variables need to be processed and accessed over and over again in order to provide an excellent design of the supports and related built simulation.

Due to these many input parameters, new material data are needed regularly, which in turn need to be calibrated, and validated, thereby causing significant cost and effort. The schematic and simplified flowchart as depicted in Figure 3 shall indicate this situation at least qualitatively.

The build simulation approaches at issue are usually set up for a finite element analysis of mechanical and/or thermal properties of a predefined geometry and/or material. Finite element analysis (FEM) is a powerful route for numerically solving (partial) differential equations in 2D or in the three-dimensional space. Mostly a boundary value problem is modeled, wherein the FEM subdivides or discretizes a given model system into smaller, simpler parts called finite elements. For the discretization, usually a mesh of voxels or tetrahedrons is implemented providing a numerical domain having a finite number of points.

To satisfy quality standards, a huge library of materials is needed. Due to these many input parameters, a new material data set is regularly required, which must be calibrated costly. The upper layer of the build simulation BS (cf. top arrow in Figure 3) indicates the (temporal) course from left to right. Within a conventional build simulation, a material calibration MC is required as shown in the layer below on the left. This material calibration MC in turn requires a calibration print trial CP. For the calibration print, usually material parameters, machine- related parameters and process parameters (jointly indicated by PP) are considered in each iteration.

Only once such a calibration print has proven successful, a calibration simulation CS may follow considering and optimizing a mesh size and a lattice type (these parameters are not explicitly indicated but belong to the step CS). Provided that the material calibration MC has proven successful, the actual build simulation follows, which requires to generate an additive manufacturing built model (as indicated by AM). Afterwards, the evaluation of results takes place and it is fallen back to the calibration print CP, the calibration simulation CS and the additive manufacturing built model AM, for instance. Evidently, this procedure is inherently complex, time-consuming and cumbersome for an AM designer.

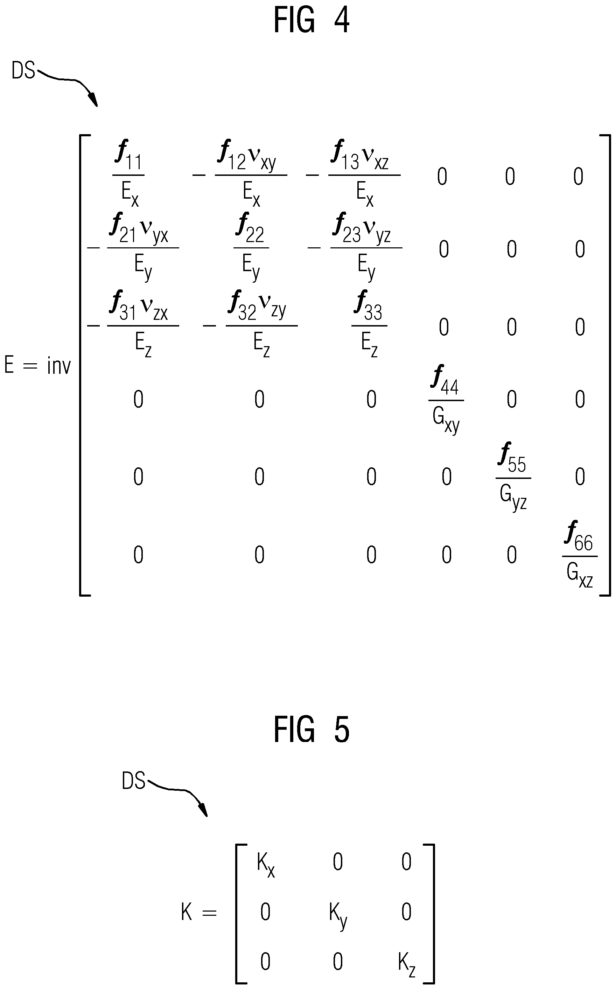

Figure 4 indicates by way of an example a non-binding embodiment of the inventive data structure product DS. The data structure comprises a matrix pattern representing an elasticity tensor and/or a stress-strain relationship (cf. $\sigma = E : \varepsilon$). The inventive data structure at least comprises entries according to the shown matrix, i.e. material properties of a Young's modulus E, a shear modulus G and/or a Poisson's ratio v. Moreover, the data structure DS comprises a model function $f_{ij}$ or related function coefficients.

The elasticity tensor may as well be or represent a compliance tensor, showing in inverse relationship of stress and strain.

According to the invention, the model function $f_{ij}$ is fully independent from the material properties MP. Instead, the function considers a set of build process parameters PP, variables of machine or printer setup, a voxel volume filling parameter Vf and/or lattice type for the build simulation.

According to such structural or functional data, the above-described merits of the invention can be realized. It is particularly an advantage that a built simulation (cf. below) can access the data structure and edit the individual (master) elements with unchanged fundamental material properties, thereby forming an artificial or user-defined data set. This inventive data set has the potential to ease the build simulation significantly, as in this course material parameters are not required to be calibrated again. Instead, a user-defined material data set is provided, wherein only the elements of the model function $f_{ij}$ need to be modeled or calibrated, wherein this model is however free of modeling material properties.

The notation of the tensor may as well differ from the indication in Figure 4. In an exemplified embodiment of the invention, the material modeled in AM corresponds to an orthotropic, linear elastic material behavior, wherein the material basically depends on nine material parameters. For each dimension an independent Young's modulus $E_{ij}$, the shear modules $G_{ij}$ and the Poisson's ratio $v_{ij}$ is defined. The indicated material tensor (being actually a fourth order tensor) is further simplified and shown according to the so-called Kelvin or Voigt notation, wherein due to certain symmetry considerations only three $v_{ij}$ are independent. Hence, dimension of the tensor can be reduced, which is, however, not a prerequisite of the presented data structure.

The provided data structure particularly excels in its compatibility with finite element algorithm in the present context.

Figure 4 shows another example of a simplified (symmetric) thermal conductivity tensor, the whole tensor or its elements may as well be part of the inventive data structure DS. In this context, the equation $q = - \kappa \, \Delta\vartheta$ outlines the relationship between the heat flux vector q (corresponds to the stress in the mechanical equivalent), thermal conductivity $\kappa$ (corresponds to the mechanical compliance or elasticity in the mechanical equivalent) and a temperature gradient $\nabla\vartheta$ (corresponds to the strain or displacement of the structure in the mechanical equivalent), wherein $\kappa$ is given in the matrix form as shown in Figure 5.

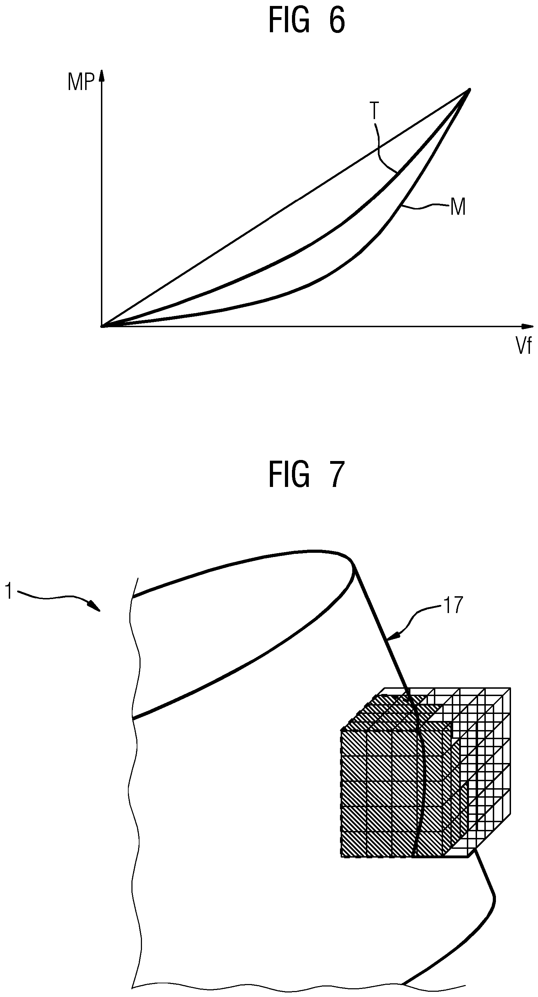

To this end, the inventive build simulation method may be a multi-physics built simulation, considering as well thermal and mechanical material properties (cf. Figure 6 below).

The examples shown in Figures 4 and 5 shall simply indicate that thermal and mechanical properties are often summarized or dealt with jointly in finite element analyses. To this effect the term "mechanical properties" may be used synonymously with thermo- mechanical properties and/or thermal and mechanical properties of a given material.

In other words, the provided inventive (user-defined) material data structure allows advantageously to specify the master element's behavior for a chosen set of input parameters. Each entry of the indicated tensor can e.g. be accessed separately by the arbitrary model function $f_{ij}$. The material properties MP, being specific for each material ($E_{ij}$, $G_{ij}$, $v_{ij}$), remain unchanged for the mechanical compliance tensor while all other influences are covered by $f_{ij}$. This results in changed dependencies that are used to reduce the amount of variables of the material data. Then, material data only depend on the mechanical (thermo-mechanical) properties. The lattice type and density, as well machine and mesh size influence or factor into the function $f_{ij}$. The set of model functions $f_{ij}$ however only has to be specified and calibrated once.

This results in the following contributions if inserted into the superior voxel-approach:

$$E^*_{vox} = E^* \; (V_{vox} \; / \; V_{elem}),$$

wherein $E^*$ depends on the material data, the voxel volume, lattice type, machine parameters and the material properties. $Vf$ on the other hand equals to ($V_{vox}$ / $V_{elem}$), that is the (filling) ratio of the voxel volume (voxel size) divided by the respective voxel's maximum size (voxel mesh size).

Since the mechanical and thermal behavior of lattice structures is usually well known (cf. Figure 6), this physically motivated knowledge can be applied. As a result, the lattice type, density and voxel size are eliminated as material data variables.

In this context, Figure 6 shows a qualitative course of scaled material properties as a function of the voxel volume filling $Vf$. Numerals T and M indicate by reference to this figure thermal and mechanical properties, respectively; the straight-line is then the approximate or scaled voxel property.

As mentioned above, the outlined approach enables to cover influences of the build parameters and machine settings as well in the model function $f_{ij}$.

Figure 7 shows an example on the calculation or determination of the voxel filling (cf. large cuboid) density via sub-voxels (smaller cuboids). The example shows a large cuboid consisting of $5^3 = 125$ sub-voxels.

It is particularly shown by way of the course of the edge 17 of the object that, if any portion of the object goes through a given sub-voxel, these sub-voxels are contoured and filled. Provided that, according to another example, 70 sub-voxels are filled as indicated in Figure 7, the remaining 55 may be left empty. This leads to a voxel density of around 56 %. Material properties in the solution are then scaled down to only 56 % for this given element.

As compared to Figure 3, the provided invention brings plenty of advantages, as schematically indicated by the flow diagram of Figure 8. It is particularly shown that the actual evaluation of results requires much less input parameters, calculation steps and parameter considerations as the chart indicated in figure 3.

At best, material properties need to be considered at the very end of the process, i.e. during the evaluation of the results and not during the process as in the case for conventional build simulations. As process parameters PP at the bottom left in Figure 8, e.g. the support topology, mesh size, lattice type, machine settings and further process parameters are summarized.

The presented data structure and also method of additive manufacturing built simulation - accessing the data structure - are significantly improved by the inventive concept. A particular merit of the method deploying the provided data structure and the inventive model function $f_{ij}$ is that lattice type and its density can easily be varied during the built preparation or build simulation without requiring exorbitant modelling capacity and computation times.

It is further contemplated that the provided data structure DS is archived on a phenological library to serve as a base for material, machine and/or process parameters in future build process simulations.

The object 1 as referred to herein may particularly relate to a part or an article of complex shape, such as with filigree portions of structures. Preferably, said component is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The number of process parameters accordingly describing or comprehensively characterizing a layer for a structurally sophisticated object or component, such as a burner component of a gas turbine, may exceed the number of one hundred. The following quantities may as well be understood as process parameters: Layer thickness, melt pool geometry, heat impact per volume or area unit, laser wavelength, hatching distance, i.e. distance of adjacent scanning lines, beam offset, beam speed, melt pool dimension, geometry of beam spot, beam angle, type of purge gas, flow rate of purge gas, flow rate of possible exhaustion gas, states of gas valves, set ambient pressure prior to or during build job, state of base material, and others.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

**Claims**

1. An additive manufacturing built simulation data structure (DS) being assembled for a finite element analysis (FEM) of mechanical properties (M, T) of an object (1) to be additively manufactured, wherein the data structure (DS) comprises a matrix pattern representing an elasticity tensor (E), wherein matrix elements of the elasticity tensor (E) comprise:

     - material properties of a Young's modulus (E), a shear modulus (G) and/or a Poisson's ratio (v) of the object (1), and

- a model function ($f_{ij}$) being independent from the material properties (MP), wherein the function ($f_{ij}$) considers a set of build process parameters (PP), a machine setup, a voxel volume filling (Vf) and/or a lattice type for the build simulation.

2. The data structure (DS) according to claim 1, also comprising a further matrix pattern representing a thermal conductivity tensor ($\kappa$), wherein matrix elements of the thermal conductivity tensor ($\kappa$) comprise material properties (MP) of a thermal conductivity ($\kappa$) of the object (1).

3. An additive manufacturing built simulation method for simulating the manufacture of the object (1), the method comprising the steps:

   - (i) accessing the data structure (DS) of claim 1 or 2, and
   - (ii) performing the build simulation by executing a finite element algorithm (FEM) based on the entries of the data structure (DS), wherein all material properties (MP) are defined as constants in the matrix and only the elements of the model function ($f_{ij}$) are calibrated for a given material.

4. The method according to claim 3, wherein the build simulation comprises an iterative adaption routine according to which a calibration is free of any modelling of material properties (MS).

5. The method according to claim 3 or 4, wherein matrix elements of the data structure (DS) are accessed and edited individually with unchanged material properties (MP) thereby forming a user-defined material dataset.

6. The method according to one of claims 3 to 5, being a multi-physics process simultaneously simulating physical stress on the object (10) to be manufactured and a temperature distribution (T) in the object and/or a thermal expansion.

7. The method according to one of claims 3 to 6, wherein the object comprises a lattice support structure (2).

8. The method according to claim 7, wherein a geometry of the lattice (2) or its density is changed during the built simulation process.

9. The method according to one of claims 3 to 8, wherein the data structure (DS) is archived on a phenological library to serve as a base for material, machine and/or process parameters in future build process simulations.

10. The method according to one of claims 3 to 9, wherein calibration of the model function ($f_{ij}$) is enhanced or evaluated by complex data processing means and/or artificial intelligence.

11. A computer program comprising means which, when the program is executed by a computer, cause the computer to carry out the steps of the method of one of claims 3 to 10.

12. A computer-readable storage medium having stored thereon the data structure (DS) of claim 1 and/or the computer program of claim 11.

13. A device (2), particularly comprising a computer-readable storage medium having stored thereon the computer program of claim 12, and comprising means to execute the method of one of the claims 3 to 10.

# FIG 1

# FIG 2

## FIG 3

# FIG 4

DS

$$E = inv \begin{bmatrix} \dfrac{\boldsymbol{f}_{11}}{E_x} & -\dfrac{\boldsymbol{f}_{12}\nu_{xy}}{E_x} & -\dfrac{\boldsymbol{f}_{13}\nu_{xz}}{E_x} & 0 & 0 & 0 \\[2em] -\dfrac{\boldsymbol{f}_{21}\nu_{yx}}{E_y} & \dfrac{\boldsymbol{f}_{22}}{E_y} & -\dfrac{\boldsymbol{f}_{23}\nu_{yz}}{E_y} & 0 & 0 & 0 \\[2em] -\dfrac{\boldsymbol{f}_{31}\nu_{zx}}{E_z} & -\dfrac{\boldsymbol{f}_{32}\nu_{zy}}{E_z} & \dfrac{\boldsymbol{f}_{33}}{E_z} & 0 & 0 & 0 \\[2em] 0 & 0 & 0 & \dfrac{\boldsymbol{f}_{44}}{G_{xy}} & 0 & 0 \\[2em] 0 & 0 & 0 & 0 & \dfrac{\boldsymbol{f}_{55}}{G_{yz}} & 0 \\[2em] 0 & 0 & 0 & 0 & 0 & \dfrac{\boldsymbol{f}_{66}}{G_{xz}} \end{bmatrix}$$

# FIG 5

DS

$$K = \begin{bmatrix} K_x & 0 & 0 \\ 0 & K_y & 0 \\ 0 & 0 & K_z \end{bmatrix}$$

# FIG 6

# FIG 7

## FIG 8

Europäisches Patentamt

European Patent Office

Office européen des brevets

# EUROPEAN SEARCH REPORT

**Application Number**

EP 25 15 2913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | POISSENOT-ARRIGONI BASTIEN ET AL: "Determination of orthotropic mechanical properties of 3D printed parts for structural health monitoring", PROCEEDINGS OF SPIE; [PROCEEDINGS OF SPIE ISSN 0277-786X VOLUME 10524], SPIE, US, vol. 10168, 12 April 2017 (2017-04-12), pages 101681D-101681D, XP060091256, DOI: 10.1117/12.2260397 ISBN: 978-1-5106-1533-5 | 1-3,5, 9-13 | INV. G06F30/23 B33Y50/00 ADD. G06F111/10 G06F113/10 G06F119/08 G06F119/18 |
| Y | * Sec. 2, 2.1; 4.2, 4.3; 5 Eq. (1) - (2); table 3 * | 8 | |
| X | SARKAR DEVASHISH ET AL: "Advances in computational modeling for laser powder bed fusion additive manufacturing: A comprehensive review of finite element techniques and strategies", ADDITIVE MANUFACTURING, ELSEVIER, NL, vol. 85, 5 April 2024 (2024-04-05), XP087531669, ISSN: 2214-8604, DOI: 10.1016/J.ADDMA.2024.104157 [retrieved on 2024-04-26] * Sec. 1.1; 3.1, 3.3, 3.4; 4.1.1 * | 1-4,6, 9-13 | |
| X | WO 2020/246993 A1 (HEWLETT PACKARD DEVELOPMENT CO [US]) 10 December 2020 (2020-12-10) | 1-3,7, 9-13 | TECHNICAL FIELDS SEARCHED (IPC) G06F C22C B33Y B22F |
| Y | * paragraphs [0008], [0011], [0013], [0020], [0021], [0033], [0040] * | 8 | |

-/--

The present search report has been drawn up for all claims

| Place of search | Date of completion of the search | Examiner |
|---|---|---|
| Munich | 2 May 2025 | Lampmann, Arne |

EPO FORM 1503 03.82 (P04C01)

Europäisches
Patentamt

European
Patent Office

Office européen
des brevets

## EUROPEAN SEARCH REPORT

**Application Number**

EP 25 15 2913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAMYKANO M ET AL: "Mechanical property of FDM printed ABS: influence of printing parameters", THE INTERNATIONAL JOURNAL OF ADVANCED MANUFACTURING TECHNOLOGY, SPRINGER, LONDON, vol. 102, no. 9, 6 February 2019 (2019-02-06), pages 2779-2796, XP036790869, ISSN: 0268-3768, DOI: 10.1007/S00170-019-03313-0 [retrieved on 2019-02-06] * Sec. 5 *<br><br>----- | 1-13 | |
| | | | **TECHNICAL FIELDS SEARCHED (IPC)** |

The present search report has been drawn up for all claims

| Place of search | Date of completion of the search | Examiner |
|---|---|---|
| Munich | 2 May 2025 | Lampmann, Arne |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 2913

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | | Publication date |
|---|---|---|---|---|
| WO 2020246993 A1 | 10-12-2020 | CN | 113924204 A | 11-01-2022 |
| | | EP | 3980248 A1 | 13-04-2022 |
| | | US | 2022083712 A1 | 17-03-2022 |
| | | WO | 2020246993 A1 | 10-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4287060 A1